(19)

**Europäisches Patentamt**
**European Patent Office**
**Office européen des brevets**

(11)  **EP 2 761 517 B1**

(12)  **EUROPEAN PATENT SPECIFICATION**

(45) Date of publication and mention
of the grant of the patent:
**05.07.2023  Bulletin 2023/27**

(21) Application number: **12834671.5**

(22) Date of filing: **01.10.2012**

(51) International Patent Classification (IPC):
**G01J 3/50** *(2006.01)*       **B60S 5/00** *(2006.01)*

(52) Cooperative Patent Classification (CPC):
**B60S 5/00; G01J 3/463; G01J 3/504;**
F04C 2270/041

(86) International application number:
**PCT/US2012/058243**

(87) International publication number:
**WO 2013/049792 (04.04.2013 Gazette 2013/14)**

(54) **METHOD FOR MATCHING COLOR AND APPEARANCE OF COATINGS CONTAINING EFFECT PIGMENTS**

VERFAHREN ZUR ANPASSUNG DER FARBE UND DES ERSCHEINUNGSBILDES VON BESCHICHTUNGEN MIT EFFEKTPIGMENTEN

PROCÉDÉ D'HARMONISATION DE LA COULEUR ET DE L'APPARENCE DE REVÊTEMENTS CONTENANT DES PIGMENTS À EFFETS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.09.2011  US 201161541348 P**

(43) Date of publication of application:
**06.08.2014  Bulletin 2014/32**

(73) Proprietor: **Axalta Coating Systems GmbH**
**4057 Basel (CH)**

(72) Inventors:
• **PRAKASH, Arun**
**West Chester, Pennsylvania 19382 (US)**
• **STEENHOEK, Larry Eugene**
**Wilmington, Delaware 19808 (US)**

• **MOHAMMADI, Mahnaz**
**Moorestown, New Jersey 08057 (US)**
• **RODRIGUES, Allan Blase Joseph**
**Bloomfield Hills, Michigan 48304 (US)**
• **OBETZ, Judith Elaine**
**Newtown Square, Pennsylvania 19073 (US)**

(74) Representative: **LKGlobal UK Ltd.**
**Cambridge House**
**Henry Street**
**Bath BA1 1BT (GB)**

(56) References cited:
**WO-A1-2008/103405       US-A- 5 583 642**
**US-A1- 2002 106 121       US-A1- 2004 111 435**
**US-A1- 2005 128 484       US-A1- 2009 019 086**
**US-A1- 2009 019 086       US-A1- 2009 157 212**
**US-B1- 6 507 803**

**Description**

FIELD OF DISCLOSURE

The present disclosure is directed to a method for matching color and appearance of a target coating of an article, particularly a target coating comprising one or more effect pigments.

BACKGROUND OF DISCLOSURE

Surface coatings containing effect pigments, such as light absorbing pigments, light scattering pigments, light interference pigments, and light reflecting pigments are well known. Metallic flake pigments, for example aluminum flakes, are examples of such effect pigments and are especially favored for the protection and decoration of automobile bodies. The effect pigments can produce visual appearance effects, such as differential light reflection effects, usually referred to as "flop"; flake appearance effects, which include flake size distribution and the sparkle imparted by the flake; and also the effects of enhancement of depth perception in coatings. The flop effect is dependent upon the angle from which the coating is illuminated and viewed. The flop effect can be a function of the orientation of the metallic flakes with respect to the outer surface of the coating and the surface smoothness of the flake. The sparkle can be a function of the flake size, surface smoothness, orientation, and uniformity of the edges. The flop and sparkle effects produced by flakes can further be affected by other pigments in the coating, such as light absorbing pigments, light scattering pigments, or flop control agents. Any light scatter from the pigments or the flakes themselves, e.g., from the flake edges, can diminish both the flop and the sparkle of the coating.

For repairing a previously coated substrate, for example, of an automotive body, it is necessary to choose the correct pigments to match the color of the coated substrate as well as the correct effect pigments such as flakes to match the color and appearance of the coated substrate. Many coating formulas are made available by paint suppliers to match various vehicles and objects to be coated. Often there are multiple coating formulas available for the same vehicle make and model because of vehicle coating color and appearance variability due to slight variations in formulations, ingredients used, coating application conditions such as coating application techniques or locations used by vehicle original equipment manufacturers. These color and appearance variations make it difficult to identify the best formula to attain excellent matches in vehicle shops. A number of methods have been developed to identify formulas of correct pigments to achieve color match. Some attempts were made to match both color and appearance of a target coating.

There are still needs for a method for the selection, from multiple existing coating formulas, of one or more matching formulas that closely match both the color and appearance of the target coating.

The document US 2009/019086 A1 is directed to a method for identifying one or more matching formulas for matching color and appearance of a target coating containing effect pigments.

The document WO2008/103405 A1 relates to a method for automatic selection of colorants and flakes to produce one or more matching formulas to match color and appearance of a target coating containing flakes.

The document US 2005/128484 A1 is directed to a method for determining a color matched repair paint formula, wherein color characteristics of a target color to be matched are identified, inputted, and processed in such way as to enable a visual display of the target color, then alternate color(s) is/are selected from a color database based upon color characteristics of the target color to be matched, then subsequently processed and visually displayed, thus enabling comparison of the alternate color(s) with the target color; and finally, a desired alternate color is selected, and a formulation thereof determined. And wherein further, the target color may be superimposed over an image of a vehicle to be repaired, and alternate candidates may even be superimposed over the target color in the area of the vehicle to be repaired, in order to assist the user with selecting the best match.

STATEMENT OF DISCLOSURE

This invention is directed to a method for matching color and appearance of a target coating of an article in accordance with claim 1.

In order to implement the invention, a system for matching color and appearance of a target coating of an article is used, the system comprising:

    a) a color measuring device;
    b) a sparkle measuring device;
    c) a color database comprising formulas for coating compositions and interrelated sparkle characteristics, color characteristics, and one or more identifiers of articles;
    d) a computing device comprising an input device and a display device, said computing device is functionally coupled to said color measuring device, said sparkle measuring device, and said color database; and

e) a computer program product residing in a storage media functionally coupled to said computing device, said computer program product causes said computing device to perform a computing process comprising the steps of the method of claim 1.

BRIEF DESCRIPTION OF DRAWING

Figure 1 shows examples of various illumination angles and viewing angles.
Figure 2 shows an example of a fixed viewing angle and 3 illumination angles for measuring sparkle values.
Figure 3 shows an example of a fixed illumination angle and various viewing angles for measuring sparkle values.
Figure 4 shows an example of a representative image display on a digital display.
Figure 5 shows an example of a representative video display of the images.

DETAILED DESCRIPTION

The features and advantages of the present invention will be more readily understood, by those of ordinary skill in the art, from reading the following detailed description. It is to be appreciated that certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both proceeded by the word "about." In this manner, slight variations above and below the stated ranges can be used to achieve substantially the same results as values within the ranges. Also, the disclosure of these ranges is intended as a continuous range including every value between the minimum and maximum values.

As used herein:

The term "dye" means a colorant or colorants that produce color or colors and is usually soluble in a coating composition.

The term "pigment" or "pigments" used herein refers to a colorant or colorants that produce color or colors and is usually not soluble in a coating composition. A pigment can be from natural and synthetic sources and made of organic or inorganic constituents. A pigment can also include metallic particles or flakes with specific or mixed shapes and dimensions.

The term "effect pigment" or "effect pigments" refers to pigments that produce special effects in a coating. Examples of effect pigments can include, but not limited to, light absorbing pigment, light scattering pigments, light interference pigments, and light reflecting pigments. Metallic flakes, for example aluminum flakes, can be examples of such effect pigments.

The term "gonioapparent flakes", "gonioapparent pigment" or "gonioapparent pigments" refers to pigment or pigments pertaining to change in color, appearance, or a combination thereof with change in illumination angle or viewing angle. Metallic flakes, such as aluminum flakes are examples of gonioapparent pigments. Interference pigments or pearlescent pigments can be further examples of gonioapparent pigments.

"Appearance" used herein refers to (1) the aspect of visual experience by which a coating is viewed or recognized; and (2) perception in which the spectral and geometric aspects of a coating is integrated with its illuminating and viewing environment. In general, appearance can include shape, texture, sparkle, glitter, gloss, transparency, opacity, other visual effects of a coating, or a combination thereof. Appearance can vary with varying viewing angles or varying illumination angles.

The term "texture", "textures", or "texture of coating" refers to coating appearances that are resulted from the presence of flakes or other effect pigment or pigments in the coating composition. The flakes can include, such as, metallic flakes like aluminum flakes, coated aluminum flakes, interference pigments, like mica flakes coated with metal oxide pigments, such as, titanium dioxide coated mica flake or iron oxide coated mica flake, diffractive flakes, such as, vapor deposited coating of a dielectric over finely grooved aluminum flakes. The texture of a coating can be represented with a texture function generated statistically by measuring the pixel intensity distribution of an image of the coating captured by a digital imaging device. The texture function can be used to generate an image of the coating by duplicating those pixel intensity statistics in the image. For example, if a specimen texture function comprises the pixel intensity distribution of a captured image of a specimen coating in a Gaussian distribution function having mean intensity of $\mu$ and a standard deviation of $\sigma$, then the specimen image of the coating can be generated based on the Gaussian distribution function having the mean intensity of $\mu$ and the standard deviation of $\sigma$. The statistical fit can be dependant on specific coatings. The following devices can be used to generate useful data for the determination of the statistical texture function of a coating: flatbed scanning device, wand type scanner or an electronic camera. The texture function of a coating can also be generated based on color data and sparkle values of the coating.

The term "sparkle", "sparkles", "sparkling" or "sparkle effect" refers to the visual contrast between the appearance of highlights on particles of gonioapparent pigments and their immediate surroundings. Sparkle can be defined by, for example, ASTM E284-90 and other standards or methods.

The term "flop" refers to a difference in appearance of a material viewed over two widely different aspecular angles. As used herein, the term "flop value", "flop values" or "flop index" refers to a numerical scale of flop obtained by instrumental or visual experiments, or derived from calculations based on color data. In one example, flop index can be defined by ASTM E284 or other standards or methods.

The term "database" refers to a collection of related information that can be searched and retrieved. The database can be a searchable electronic numerical or textual document, a searchable PDF document, an Microsoft Excel® spreadsheet, an Microsoft Access® database (both supplied by Microsoft Corporation of Redmond, Washington), an Oracle® database (supplied by Oracle Corporation of Redwood Shores, California), or a Lynux database, each registered under their respective trademarks. The database can be a set of electronic documents, photographs, images, diagrams, or drawings, residing in one or more computer readable storage media that can be searched and retrieved. A database can be a single database or a set of related databases or a group of unrelated databases. "Related database" means that there is at least one common information element in the related databases that can be used to relate such databases. One example of the related databases can be Oracle® relational databases. In one example, color characteristics comprising color data values such as L,a,b color values, L*,a*,b* color values, XYZ color values, L,C,h color values, spectral reflectance values, light absorption (K) and scattering (S) values (also known as "K,S values"), or a combination thereof, can be stored in and retrieved from one or more databases. Other color values such as Hunter Lab color values, ANLAB color values, CIE LAB color values, CIE LUV color values, L*,C*,H* color values, any other color values known to or developed by those skilled in the art, or a combination thereof, can also be used. In another example, appearance characteristics, sparkle values and related measurements, coating formulations, vehicle data, or a combination thereof, can be stored and retrieved from one or more databases.

The term "vehicle", "automotive", "automobile", "automotive vehicle", or "automobile vehicle" refers to an automobile such as car, van, mini van, bus, SUV (sports utility vehicle); truck; semi truck; tractor; motorcycle; trailer; ATV (all terrain vehicle); pickup truck; heavy duty mover, such as, bulldozer, mobile crane and earth mover; airplanes; boats; ships; and other modes of transport that are coated with coating compositions.

A computing device used herein can refer to a data processing chip, a desktop computer, a laptop computer, a pocket PC, a personal digital assistant (PDA), a handheld electronic processing device, a smart phone that combines the functionality of a PDA and a mobile phone, or any other electronic devices that can process information automatically. A computing device can be built into other electronic devices, such as a built-in data processing chip integrated into an imaging device, color measuring device, or an appearance measuring device. A computing device can have one or more wired or wireless connections to a database, to another computing device, or a combination thereof. A computing device can be a client computer that communicates with a host computer in a multi-computer client-host system connected via a wired or wireless network including intranet and internet. A computing device can also be configured to be coupled with a data input or output device via wired or wireless connections. For example, a laptop computer can be operatively configured to receive color data and images through a wireless connection. A "portable computing device" includes a laptop computer, a pocket PC, a personal digital assistant (PDA), a handheld electronic processing device, a mobile phone, a smart phone that combines the functionality of a PDA and a mobile phone, a tablet computer, or any other electronic devices that can process information and data and can be carried by a person.

Wired connections can include hardware couplings, splitters, connectors, cables or wires. Wireless connections and devices can include, but not limited to, Wi-Fi device, Bluetooth device, wide area network (WAN) wireless device, local area network (LAN) device, infrared communication device, optical data transfer device, radio transmitter and optionally receiver, wireless phone, wireless phone adaptor card, or any other devices that can transmit signals in a wide range of radio frequency including visible or invisible optical wavelengths and electromagnetic wavelengths.

An imaging device can refer to a device that can capture images under a wide range of radio frequency including visible or invisible optical wavelengths and electromagnetic wavelengths. Examples of the imaging device can include, but not limited to, a still film optical camera, an X-Ray camera, an infrared camera, a video camera, also collectively known as a low dynamic range (LDR) imaging device or a standard dynamic range (SDR) imaging device, and a high dynamic range (HDR) or wide dynamic range (WDR) imaging device such as those using two or more sensors having varying sensitivities. The HDR and the WDR imaging device can capture images at a greater dynamic range of luminance between the lightest and darkest areas of an image than typical SDR imaging devices. A digital imager or digital imaging device refers to an imaging device captures images in digital signals. Examples of the digital imager can include, but not limited to, a digital still camera, a digital video camera, a digital scanner, and a charge couple device (CCD) camera. An imaging device can capture images in black and white, gray scale, or various color levels. A digital imager is preferred in this invention. Images captured using a non-digital imaging device, such as a still photograph, can be converted into digital images using a digital scanner and can be also suitable for this invention.

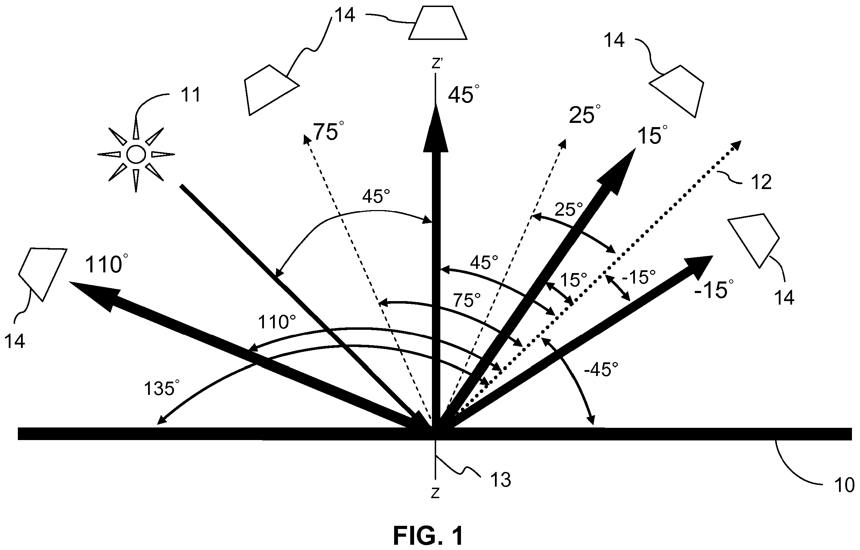

Color and sparkle of a coating can vary in relation to illumination angles or viewing angles. Examples for color measurements can include those described in ASTM E-2194. Briefly, when a coating (10) is illuminated by an illumination device (11), such as a light emitting or light directing device or sun light, at an illumination angle measured from the normal Z-Z' (13) as shown in FIG. 1, a number of viewing angles are used, such as, 1) near aspecular angles that are the viewing angles in a range of from 15° to 25° from the specular reflection (12) of the illumination device (11); 2) mid aspecular angles that are the viewing angles around 45° from the specular reflection (12); and 3) far aspecular angles (also known as flop angle) that are the viewing angles in a range of from 75° to 110° from the specular reflection (12). In general, color appears to be brighter at near aspecular angles and darker at far aspecular angles. As used herein, the viewing angles are the angles measured from the specular reflection (12) and the illumination angles are the angles measured from the normal direction shown as Z-Z' (13) (FIG. 1 - FIG. 3) that is perpendicular to the surface of the coating or the tangent of the surface of the coating. The color and sparkle can be viewed by a viewer or one or more detectors (14) at the various viewing angles.

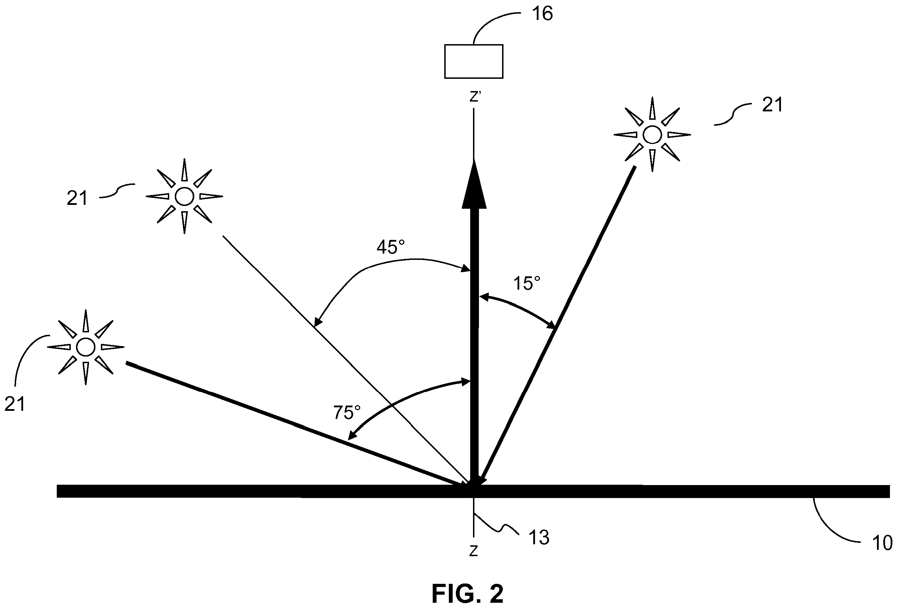

Although specific viewing angles are specified above and can be preferred, viewing angles can include any viewing angles that are suitable for viewing the coating or detecting reflections of the coating. A viewing angle can be any angles, continuously or discretely, in a range of from 0° from the specular reflection (12) to the surface of the coating (10) on either side of the specular reflection (12), or in a range of from 0° from the specular reflection (12) to the tangent of the surface of the coating. In one example, when the specular reflection (12) is at 45° from the normal (Z-Z') (13), viewing angles can be any angles in the range of from 0° to -45° from the specular reflection, or from 0° to 135° from the specular reflection (FIG. 1). In another example, when the specular reflection (12) is at 75° from the normal (Z-Z'), viewing angles can be any angles in a range of from 0° to -15° from the specular reflection, or from 0° to 165° from the specular reflection. Depending on the specular reflection (12), the range of viewing angles can be changed and determined by those skilled in the art. In yet another example, a detector (16), such as a camera or a spectral sensor can be fixed at the normal (Z-Z') facing towards the coating surface (10) (FIG. 2). One or more illumination sources (21) can be positioned to provide illuminations at one or more illumination angles, such as at 15°, 45°, 75°, or a combination thereof, from the normal (Z-Z') (13).

This disclosure is directed to a method for matching color and appearance of a target coating of an article. The method comprises the steps of claim 1.

The target coating comprises one or more effect pigments. Any of the aforementioned effect pigments can be suitable.

The specimen sparkle values can be obtained from a separate data source, such as provided by a manufacturer of the article, provided by a measurement center, measured using a sparkle measuring device, or a combination thereof.

Sparkle values can be a function of sparkle intensity and sparkle area such as a sparkle function defined below:

$$S_g = f(S_i, S_a)$$

wherein, $S_g$, $S_i$ and $S_a$ are sparkle value, sparkle intensity, and sparkle area, respectively. To measure the sparkle value at a predetermined illumination angle, a predetermined viewing angle, or a combination thereof, the sparkle intensity and sparkle area of the coating are measured at the chosen angle or a combination of angles and then calculated based on a chosen algorithm. In one example, the sparkle intensity, and sparkle area can be measured from one or more images of the coating captured with an imaging device, such as a digital camera at a chosen angle or a combination of angles. One or more algorithms can be employed to define the function to calculate the $S_G$ from $S_i$ and $S_a$. In one example, sparkle values can be obtained from commercial instruments, such as BYK-mac available from BYK-Gardner USA, Columbia, Maryland, USA. In yet another example, images captured by the imaging device can be entered into a computing device to generate sparkle values.

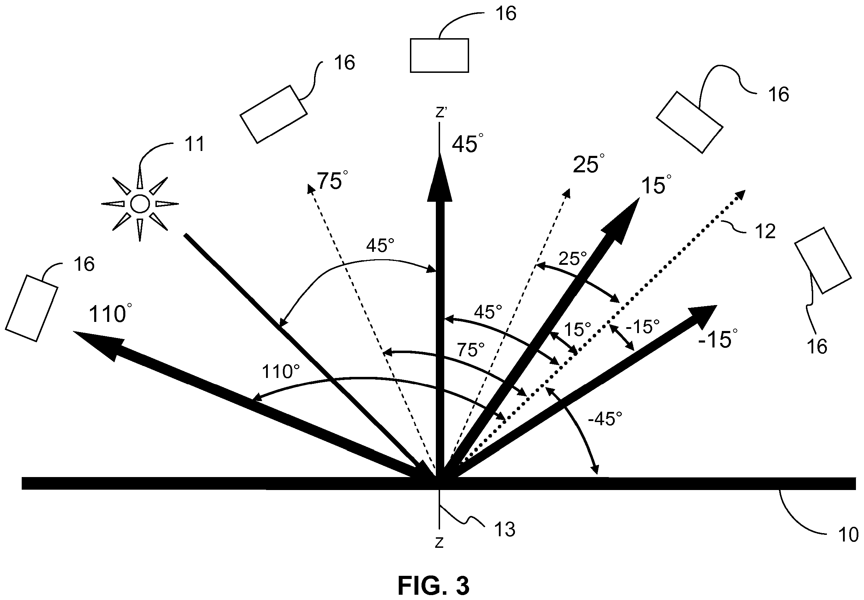

The specimen sparkle values are measured at one or more sparkle illumination angles, one or more sparkle viewing angles, or a combination thereof. In one example, the specimen sparkle values can be measured with one detector (16) at a fixed viewing angle with two or more illumination angles such as 15°, 45°, 75°, or a combination thereof such as those as shown in FIG. 2. In another example, the specimen sparkle values can be measured at two illumination angles such as 15° and 45°. In yet another example, the specimen sparkle values can be measured at one or more viewing angles with a fixed illumination angle, such as those illustrated in FIG. 3. One or more detectors (16), such as digital cameras can be places at one or more of the viewing angles, such as at -15°, 15°, 25°, 45°, 75°, 110° or a combination thereof. In yet another example, a plurality of detectors can be placed at the viewing angles to measure sparkle values simultaneously. In a further example, one detector can measure sparkle values at the one or more viewing angles sequentially.

The sparkle differences ($\Delta S_g$) can be defined as:

$$\Delta S_g = f(S_{g\text{-Match}},\ S_{g\text{-Spec}})$$

wherein, $S_{g\text{-Match}}$ and $S_{g\text{-Spec}}$ are sparkle characteristics of matching formulas and specimen sparkle values, respectively.

Since $S_g$ is a function of $S_i$ and $S_a$, the sparkle differences ($\Delta S_g$) can also be defined as:

$$\Delta S_g = f(\Delta S_i,\ \Delta S_a)$$

or

$$\Delta S_g = f(S_{i\text{-Match}},\ S_{i\text{-Spec}},\ S_{a\text{-Match}},\ S_{a\text{-Spec}})$$

wherein, $\Delta S_i$ and $\Delta S_a$ are differences in sparkle intensities and sparkle areas between the matching formula and the specimen, respectively; and $S_{i\text{-Match}}$, $S_{i\text{-Spec}}$, $S_{a\text{-Match}}$ and $S_{a\text{-Spec}}$ are sparkle intensities and sparkle areas of the matching formula and the specimen, respectively. Any functions suitable for calculating differences can be suitable. A number of constants, factors, or other mathematical relations can be determined empirically or through modeling.

The color data, either the specimen color data or color characteristics of formulas for coating compositions in the color database, can comprise color data values such as L,a,b color values, L*,a*,b* color values, XYZ color values, L,C,h color values, spectral reflectance values, light absorption (K) and scattering (S) values (also known as "K,S values"), or a combination thereof, can be stored in and retrieved from one or more databases. Other color values such as Hunter Lab color values, ANLAB color values, CIE LAB color values (also known as L*,a*,b* color values), CIE LUV color values, L*,C*,H* color values, any other color values known to or developed by those skilled in the art, or a combination thereof, can also be used. The specimen color data can be measured at two or more of the aforementioned viewing angles, such as at -15°, 15°, 25°, 45°, 75°, 110°, or a combination thereof. The specimen color data can be measured at 5 of the aforementioned viewing angles in one example, measured at 4 of the aforementioned viewing angles in another example, or measured at 3 of the aforementioned viewing angles in yet another example. In further example, the specimen color data can be measured at 15°, 45°, and 110° viewing angles, at 15°, 45°, and 75° viewing angles, or at -15°, 25°, and 75° viewing angles. The specimen color data can also be measured at two or more of the aforementioned viewing angles in combination with one or more of the aforementioned illumination angles.

Flop values of a coating can represent lightness changing at different viewing angles. The specimen flop values are generated based on the specimen color data measured at the aforementioned viewing angles. The specimen color data can comprise L,a,b or L*,a*,b* color data as specified in CIELAB color space system in which L or L* is for lightness. In this disclosure, L values or L* values at certain viewing angles can be used for generating the flop values, either the specimen flop values or the flop characteristics of matching (or preliminary matching) formulas. The specimen flop values can be generated based on the L values or L* values of the specimen color data. Color data at at least two viewing angles can be needed for generating the flop values. In one example, the flop values can be generated based on the lightness values, such as the specimen L* values at 2, 3, 4, or 5 of the above mentioned viewing angles or a combination thereof. In another example, the flop values can be generated based on the viewing angles selected from any 2 of the above mentioned viewing angles. In yet another example, the specimen flop values can be generated based on the specimen color data measured at three of any of the aforementioned color viewing angles. In a further example, the specimen flop values can be generated based on the specimen color data measured at three color viewing angles selected from 15°, 45°, and 110° viewing angles.

The flop values are defined with the following equation:

$$\text{Flop Value} = \frac{f_1(\Delta L^*)}{f_2(L^*_m)}$$

wherein, $\Delta L^*$ is the lightness difference between two widely different viewing angles. The $f_1$, $f_2$ are functions of the quantity that can include one or more weighting factors, exponent functions, or a combination thereof, and can be determined empirically, via mathematical fitting, modeling, or a combination thereof. The $L^*_m$ is the lightness at an intermediate angle m that is a viewing angle between the two widely different viewing angles. The $L^*_m$ can be used as a normalizing value Typically, lightness at 45° viewing angle can be used if the 45° viewing angle is between the two widely different viewing angles.

According to the invention, the flop values are generated based on viewing angles selected from 15°, 45°, and 110° according to following equation:

$$\text{Flop Value} = \frac{2.69(L*_{15^\circ} - L*_{110^\circ})^{1.11}}{L*_{45^\circ}{}^{0.86}}$$

wherein, the 15° and 110° are the two widely different viewing angles and the 45° viewing angle is the intermediate angle. Color data at other viewing angles can also be suitable for generating flop values. In yet another example, the flop characteristics derived from color characteristics of each of the preliminary matching formulas can be generated according to the equation above based on the lightness values at the viewing angles. As understood by those skilled in the art, the specimen flop values and the flop characteristics should have compatible data, such as from compatible or same angles.

Flop values of a coating can further comprise chroma change, hue change, or a combination thereof, at different viewing angles. The specimen flop values can further be generated based on the specimen color data comprising hue or chroma measured at the aforementioned viewing angles, or a combination thereof. In one example, the flop values can further comprise hue flop values based on hue changes, such as $\Delta H*_{ab}$. In another example, the flop values can further comprise chroma changes, such as $\Delta C*_{ab}$.

The flop difference ($\Delta F$) is generated based on a function that calculates the difference between the specimen flop value ($F_{Spec}$) and the flop characteristic derived from color characteristics of one of said preliminary matching formulas (or matching formulas) ($F_{Match}$). The flop difference can be defined by the following function:

$$\Delta F = f(F_{Spec}, F_{Match}).$$

In one example, the flop differences ($\Delta F$) can be calculated according to the equation:

$$\Delta F = (F_{Match} - F_{Spec})/F_{Spec.}$$

Other equations or mathematic formulas, such as those comprising simple difference, normalized difference, square, square roots, weighted difference, or a combination thereof, can also be used to calculate the flop differences.

The color database contains formulas interrelated with appearance characteristics and color characteristics that are compatible with the specimen color data and specimen appearance data. The specimen appearance data comprises the specimen sparkle values. When the specimen color data are measured at two or more viewing angles, the color characteristics associated with formulas in the color database contain values at at least the corresponding two or more viewing angles. Each formula in the color database is associated with color characteristics and appearance characteristics at one or more viewing angles, one or more illumination angles, or a combination thereof; and color characteristics at one or more viewing angles, one or more illumination angles, or a combination thereof. The appearance characteristics can comprise sparkle characteristics, gloss, texture, or a combination thereof. The appearance characteristics, such as the sparkle characteristics can be obtained from measurements of test panels coated with the formulas, predicted from prediction models based on the formulas, or a combination thereof. Suitable prediction models can include the neural network described hereafter for predicting sparkle characteristics. The formulas can further be associated with one or more identifiers of the article. The term "interrelated" means that the formulas, the sparkle characteristics, the color characteristics, the identifiers of articles, and other contents of the database, are associated to each other, or having mutual or reciprocal relations to each other. In one example, each formula in the database can be associated with color characteristics, flop characteristics, sparkle characteristics, texture characteristics, identifiers of articles, VINs, parts of the VINs, color codes, formulas codes, other data that can be used to identify or retrieve the color formulas, or a combination thereof.

The preliminary matching formulas are retrieved from the color database based on the specimen color data, based on an identifier of the article, or based on a combination of the color data and the identifier. The preliminary matching formulas are retrieved from the color database based on sparkle values, texture, or a combination thereof. The preliminary matching formulas can also be retrieved from the color database based on color data, flop values, sparkle values, texture data, identifiers of articles, VINs, parts of the VINs, color codes, formulas codes if known, or a combination thereof

The article can be a vehicle or any other products or items that have a layer of coating thereon. The identifier of the article can comprise an article identification number or code, a vehicle identification number (VIN) of the vehicle, part of the VIN, color code of the vehicle, production year of the vehicle, or a combination thereof. Depending on geopolitical regions, the VIN can typically contain data on a vehicle's type, model year, production year, production site and other related vehicle information. The formulas in the color database can also be associated with the VINs, parts of the VINs, color codes of vehicles, production year of vehicles, or a combination thereof.

The color difference indexes (CDI) can be generated based on total color differences, such as the ones selected from $\Delta E$, $\Delta E^*_{ab}$, $\Delta E^*_{94}$, or one or more other variations described herein, between the specimen color data and color characteristics of each of the preliminary matching formulas in considerations of one or more illumination angles, one or more viewing angles, or a combination thereof.

Color difference can be produced at a selected viewing angle, a selected illumination angle, or a pair of a selected illumination angle and a viewing angle, and can be defined by their differences in lightness ($\Delta L^*$), redness-greenness ($\Delta a^*$), and yellowness-blueness ($\Delta b^*$):

$$\Delta L^* = L^*_{Match} - L^*_{Spec}$$

$$\Delta a^* = a^*_{Match} - a^*_{Spec}$$

$$\Delta b^* = b^*_{Match} - b^*_{Spec}$$

wherein, $L^*_{Spec}$ and $L^*_{Match}$ are lightness of the specimen color data and that of one of the matching formulas, respectively; $a^*_{Spec}$ and $a^*_{Match}$ are redness-greenness of the specimen color data and that of the matching formula, respectively; and $b^*_{Spec}$ and $b^*_{Match}$ are yellowness-blueness of the specimen color data and that of the matching formula, respectively, at the selected angle or the pair of angles.

The total color difference between the specimen and one of the matching formulas (or preliminary matching formulas) can be defined as $\Delta E^*_{ab}$ in CIELAB:

$$\Delta E^*_{ab} = [(\Delta L^*)^2 + (\Delta a^*)^2 + (\Delta b^*)^2]^{1/2}$$

The color differences can also be defined by differences in lightness ($\Delta L^*$), chroma ($\Delta C^*_{ab}$), and hue ($\Delta H^*_{ab}$):

$$\Delta L^* = L^*_{Match} - L^*_{Spec}$$

$$\Delta C^*_{ab} = C^*_{ab\,Match} - C^*_{ab\,Spec}$$
$$= (a^*_{Match}{}^2 + b^*_{Match}{}^2)^{1/2} - (a^*_{Spec}{}^2 + b^*_{Spec}{}^2)^{1/2}$$

$$\Delta H^*_{ab} = [(\Delta E^*_{ab})^2 - (\Delta L^*)^2 - (\Delta C^*_{ab})^2]^{1/2}$$

Based on the lightness, chroma and hue, the total color difference $\Delta E^*_{ab}$ can also be calculated as:

$$\Delta E^*_{ab} = [(\Delta L^*)^2 + (\Delta C^*_{ab})^2 + (\Delta H^*_{ab})^2]^{1/2}$$

One or more constants or other factors can be introduced to further calculate the total color difference. One of the examples can be the CIE 1994 ($\Delta L^*$ $\Delta C^*_{ab}$ $\Delta H^*_{ab}$) color-difference equation with an abbreviation CIE94 and the symbol $\Delta E^*_{94}$:

$$\Delta E^*_{94} = [(\Delta L^*/k_L S_L)^2 + (\Delta C^*_{ab}/k_C S_C)^2 + (\Delta H^*_{ab}/k_H S_H)^2]^{1/2}$$

wherein, $S_L$, $S_C$, $S_H$, $k_L$, $k_C$, and $k_H$ are constants or factors determined according to CIE94.

The color difference indexes (CDI) can be generated based on a function of the $\Delta E^*_{ab}$ or the $\Delta E^*_{94}$ at one or more selected angles (angle 1, angle 2, ... through angle n):

$$\text{CDI} = f(\ \Delta E^*_{\text{ab-angle 1}}, \Delta E^*_{\text{ab-angle 2}}, ... \Delta E^*_{\text{ab-angle n}})$$

or

$$\text{CDI} = f(\ \Delta E^*_{\text{94-angle 1}}, \Delta E^*_{\text{94-angle 2}}, ... \Delta E^*_{\text{94-angle n}})$$

wherein the angles can be selected from any of the above mentioned illumination angles, viewing angles, or a combination thereof as determined necessary. The function can comprise a simple summation, weighted summation, means, weighted means, medians, squares, square roots, logarithmic, deviation, standard deviation, other mathematics functions, or a combination thereof.

The color difference indexes (CDI) can also be generated based on other color difference definitions or equations, such as the color differences ($\Delta E$) based on BFD, CMC, CIE 1976, CIE 2000 (also referred to as CIEDE 2000), or any other color difference definitions or equations known to or developed by those skilled in the art.

In one example, the CDI can be a weighted summation of $\Delta E^*_{94}$ for the color differences between the specimen color data and the color characteristics of one matching formula (or a preliminary matching formula) at a plurality of viewing angles, such as any 3 to 6 viewing angles selected from -15°, 15°, 25°, 45°, 75° or 110° or a combination thereof. In another example, the CDI can be a weighted summation of $\Delta E^*_{ab}$ for the color differences between the specimen color data and the color characteristics of one matching formula (or a preliminary matching formula) at a plurality of viewing angles, such as any 3 to 6 viewing angles selected from -15°, 15°, 25°, 45°, 75° or 110° or a combination thereof. In yet another example, the CDI can be a weighted summation of $\Delta E^*_{94}$ for the color differences between the specimen color data and the color characteristics of one matching formula (or a preliminary matching formula) at 3 viewing angles, such as any 3 viewing angles selected from -15°, 15°, 25°, 45°, 75° or 110°. In yet another example, the CDI can be a weighted summation of $\Delta E^*_{94}$ for the color differences between the specimen color data and the color characteristics of one matching formula (or a preliminary matching formula) at 3 viewing angles selected from 15°, 45°, and 110°.

The preliminary matching formulas can be ranked based on one or more of the $\Delta S_g$, the $\Delta F$, and the CDI. The one or more preliminary matching formulas having the smallest values, or predetermined values, of the $\Delta S_g$, the $\Delta F$, or the CDI can be selected as the matching formula (or formulas if more then one formulas fit the predetermined values). A preference or weight can also be given to one or more of the differences. In one example, the flop difference can be used first or given more weight in ranking or selecting the formulas. In another example, sparkle difference can be used first or given more weight in ranking or selecting the formulas. In yet another example, the CDI can be used first or given more weight in ranking or selecting formulas. In yet another example, a combination of any two of the differences can be used first or given more weight in ranking or selecting formulas.

The one or more matching formulas can be selected by a selection process comprising the steps of:

B1) grouping said one or more preliminary matching formulas into one or more category groups based on said sparkle differences ($\Delta S_g$) and said flop differences ($\Delta F$) according to predetermined ranges of $\Delta S_g$ values and $\Delta F$ values;

B2) ranking the preliminary matching formulas in each of the category groups based on said color difference indexes (CDI);

B3) selecting said one or more matching formulas having the minimum values in CDI.

In one example, the preliminary matching formulas can be grouped into category groups based on the $\Delta F$ and $\Delta S_g$ at 15° sparkle illumination angles ($\Delta S_g^{15}$) and $\Delta S_g$ at 45° sparkle illumination angles ($\Delta S_g^{45}$). Within each of the groups, the formulas can be ranked based on the color difference indexes (CDI). In another example, the preliminary matching formulas can be grouped into category groups based on the $\Delta F$ and CDI. Within each of the groups, the formulas can be ranked again based on $\Delta S_g$ at 15° sparkle illumination angles ($\Delta S_g^{15}$) and $\Delta S_g$ at 45° sparkle illumination angles ($\Delta S_g^{45}$). In yet another example, the preliminary matching formulas can be grouped into category groups based on the CDI and $\Delta S_g$ at 15° sparkle illumination angles ($\Delta S_g^{15}$) and $\Delta S_g$ at 45° sparkle illumination angles ($\Delta S_g^{45}$). Within each of the groups, the formulas can be ranked again based on the flop difference values ($\Delta F$).

The preliminary formulas having the minimum differences values with the specimen values can be selected as the matching formulas, and can be selected automatically by a computer or manually by an operator.

The selection process can further comprise the steps of:

B4) modifying one or more of said preliminary matching formulas to produce one or more subsequent preliminary matching formulas each having a subsequent color difference index (sub-CDI) if said color difference indexes (CDI) are greater than a predetermined CDI value; and

EP 2 761 517 B1

B5) repeating the steps B1) - B5) until said sub-CDI is equal to or less than said predetermined CDI value to produce said matching formula.

The formulas can be modified according to a linear vector or function, or a nonlinear vector or function, or a combination thereof. Examples of those vectors or functions can include the ones disclosed in US Patent No.: 3,690,771 and WO2008/150378A1.

The selection process can further comprise the steps of:

B6) producing predicted sparkle characteristics of one or more of the subsequent preliminary matching formulas based on said subsequent preliminary matching formulas and color characteristics associated with said subsequent preliminary matching formulas;

B7) modifying said subsequent preliminary matching formulas; and

B8) repeating the steps of B1) - B8) until said predicted sparkle characteristics are equal to or less than a predetermined sparkle value and said sub-CDI is equal to or less than said predetermined CDI value.

The predicted sparkle characteristics can be produced by using an artificial neural network that is capable of producing a predicted sparkle value based on a coating formula and color characteristics associated with that coating formula. Briefly, the artificial neural network can be a data modeling system that can be trained to predict sparkle values of a coating. The artificial neural network can be trained based on measured color characteristics, measured sparkle values and individual training coating formula associated with each of a plurality of training coatings. In one example, the predicted sparkle characteristics can be produced by using the artificial neural network disclosed in US Patent Application No. 61498748 and No. 61498756.

Some of the steps or a combination of the steps of the method can be programmed to be performed by a computer. In one example, the specimen sparkle values and the specimen color data can be obtained from the respective measuring devices and manually entered into a computer or automatically transferred from the measuring devices to the computer. In another example, the preliminary matching formulas can be retrieved automatically by a computer once the required data have been received by the computer. In yet another example, the sparkle differences, the flop differences, the color difference indexes, or a combination thereof, can be generated by a computer.

The method can further comprise the steps of:

A9) generating matching images having matching display values based on appearance characteristics and the color characteristics of each of said preliminary matching formulas at each of said one or more color viewing angles, one or more illumination angles, or a combination thereof, and optionally generating specimen images having specimen display values based on specimen appearance data and said specimen color data;

A10) displaying said matching images and optionally said specimen images on a display device; and

A11) selecting a best matching formula from said one or more matching formulas by visually comparing said matching images to said article, and optionally visually comparing said matching images to said specimen images.

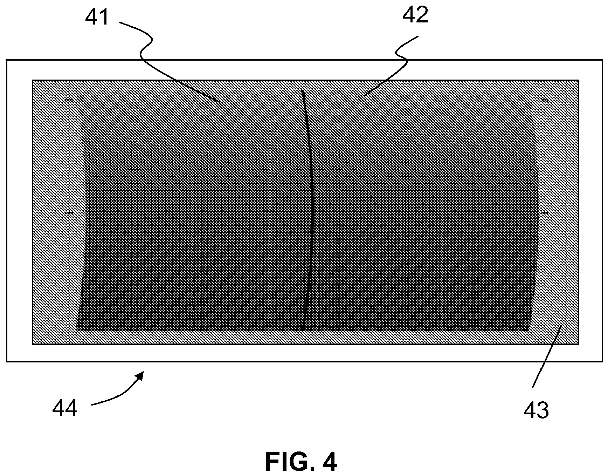

In one example, only the matching images are generated and displayed. In another example, both the matching images and the specimen images are generated and displayed. In yet another example, one specimen image (41) and one matching image (42) can be displayed side-by-side as curved realistic images having a background color (43) on a digital display device (44) (FIG. 4), such as a laptop screen. The matching images can be visually compared to the article, and optionally to the specimen images, by an operator.

The method can further comprise the steps of generating animated matching images and display the animated matching images on the display device. The animated matching images can comprise animated matching display values based on the appearance characteristics and the color characteristics, animated appearance characteristics and animated color characteristics interpolated based on the appearance characteristics and the color characteristics. The animated matching display values can comprise R,G,B values based on the appearance characteristics and the color characteristics of the matching formula, animated appearance characteristics and animated color characteristics interpolated based on the appearance characteristics and the color characteristics. The animated matching images can be displayed at a plurality of matching display angles that can include the one or more color and sparkle viewing angles, one or more color and sparkle illumination angles, or a combination thereof, associated with the matching formulas. The matching display angles can also include viewing angles, illumination angles, or a combination thereof, interpolated based on the one or more color or sparkle viewing angles, one or more color or sparkle illumination angles, or a combination thereof, associated with the matching formulas. The animated matching images can be displayed as a video, a movie, or other forms of animated display.

The method can further comprise the steps of generating animated specimen images and display the animated specimen images on the display device. The animated specimen images can comprise animated specimen display

10

values based on the specimen appearance data and the color data, animated appearance data and animated color data interpolated based on the specimen appearance data and the color data. The animated specimen display values can comprise R,G,B values based on the specimen appearance data and the color data, animated appearance data and animated color data interpolated based on the specimen appearance data and the color data. The animated specimen images can be displayed at a plurality of specimen display angles that can include the one or more viewing angles, one or more illumination angles, or a combination thereof, associated with the specimen color data and appearance data. The specimen display angles can also include viewing angles, illumination angles, or a combination thereof, interpolated based on the one or more viewing angles, one or more illumination angles, or a combination thereof, associated with the specimen color data and appearance data. The animated specimen images can be displayed as a video, a movie, or other forms of animated display.

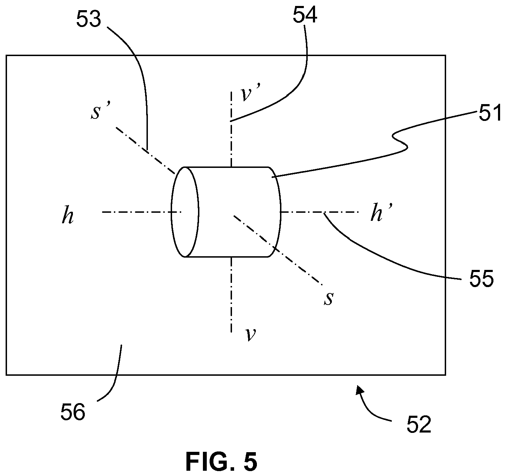

The animated images, either the animated matching images or animated specimen images, can be combined with a coated article or a part of the coated article (51), and can be displayed on a display device (51) (FIG. 5), such as a laptop screen, over a background or environment (56). The animated images can represent movements of the article, such as rotating or moving in space at any of the dimensions such as s-s' (53), v-v' (54) and h-h' (55) and to display color and appearance at different viewing angles, illumination angles, or a combination thereof. The animated images can comprise a series of images (also referred to as frames) and can be displayed continuously or frame-by-frame. The animated images can also be modified or controlled by an operator, such as by dragging or clicking on the images to change the direction or speed of rotation. The animated images can also comprise data on shape and size of the article, such as a vehicle, and environment of the article.

The appearance characteristics comprise the sparkle characteristics associated with each of said preliminary matching formulas, matching texture functions associated with each of said preliminary matching formulas, or a combination thereof, wherein the matching texture functions can be selected from measured matching texture function, predicted matching texture function, or a combination thereof. The appearance characteristics can further comprise shape or contour characteristics, environmental characteristics, one or more images such as images of a vehicle, or a combination thereof, associated with the matching formulas. In one example, the appearance characteristics can comprise the sparkle characteristics associated with each of said preliminary matching formulas. In another example, the appearance characteristics can comprise matching texture functions associated with each of said preliminary matching formulas. In yet another example, the appearance characteristics can comprise a combination of both the sparkle characteristics and the matching texture functions. The measured matching texture function associated with a formula can be generated statistically, as described above, by measuring the pixel intensity distribution of an image of the coating of one or more test panels each coated with a coating composition determined by the formula. The predicted matching texture function can be generated using a prediction model based on the formula, color data and sparkle data associated with the formula, or a combination thereof. The prediction model can be trained with a plurality of coating formulas, measured data of textures, measured data of sparkles, measured data of color, or a combination thereof. In one example, the prediction model can be a neural network trained with the aforementioned measured data. The appearance characteristics can be stored in the color database.

The specimen appearance data comprise the specimen sparkle data, a specimen texture function, or a combination thereof. The specimen texture function can be selected from measured specimen texture function, derived specimen texture function, or a combination thereof. The specimen appearance data can further shape or contour data, environmental data, one or more images, or a combination thereof, associated with the target coating or the article. The measured specimen texture function can be generated statistically, as described above, by measuring the pixel intensity distribution of an image of the target coating. The derived specimen texture function can be generated based on the specimen sparkle data and specimen color data, the identifier of the article, or a combination thereof. The derived specimen texture function can be generated based on the specimen sparkle data and specimen color data using a model, such as a neural network. In one example, a neural network can be trained using measured sparkle data, color data and texture data of a plurality of known coatings to predict texture function of a new coating based on measured color data and sparkle data of the new coating. In another example, one or more measured or derived texture functions are available and associated with the identifier of the article. In yet another example, the identifier is a vehicle identification number (VIN) and one or more measured or derived texture functions are available and associated with the VIN or part of the VIN. The measured or derived texture functions can be retrieved based on the identifier and use for generating the specimen image.

Methods and systems described in US Patent Nos. 7,743,055, 7,747,615 and 7,639,255 can be suitable for generating and display the matching images and the specimen images. The process described in US Patent No. 7,991,596 for generating and display digital images via bidirectional reflectance distribution function (BRDF) can also be suitable.

The matching formula can be selected by an operator via visual comparison or by a computer based on predetermined selection criteria programmed into the computer.

The matching display values can comprise R,G,B values based on the appearance characteristics and the color characteristics. The specimen display values can comprise R,G,B values based on the specimen appearance data and said specimen color data. The R,G,B values are commonly used in the industry to display color on digital display devices, such as cathode ray tube (CRT), liquid crystal display (LCD), plasma display, or LED display, typically used as a television, a computer's monitor, or a large scale screen.

The matching images can be displayed based on one or more illumination angles, one or more viewing angles, or a combination thereof. The specimen images can also be displayed based on one or more illumination angles, one or more viewing angles, or a combination thereof. In one example, a simulated curved object can be displayed on a single display to represent a matching image or a specimen image at one or more viewing angles. The images can be displayed as realistic images of coating color and appearance, such as being displayed based on the shape of a vehicle, or a portion thereof. Any of the aforementioned vehicles can be suitable. The environment that a vehicle is situated within can also be reflected in the specimen images or the matching images. Examples of the environment data or the environmental characteristics can include environmental lighting, shades, objects around the vehicle, ground, water or landscape, or a combination thereof.

To better represent color and sparkle associated with the matching image, at least one of said matching images or the specimen images can be generated as a high dynamic range (HDR) matching image or HDR specimen images, respectively. The HDR matching image can be generated using the aforementioned bidirectional reflectance distribution function (BRDF) described in the US patent No. 7,991,596. The BRDF can be particularly useful for generating HDR images having sparkles that have very high intensity together with color characteristics. The matching images and the specimen images can also be generated directly based on the sparkle characteristics and the color characteristics, or the specimen sparkle data and specimen color data, respectively. When sparkles are to be displayed in the high dynamic range (HDR) matching image or the HDR specimen images, a HDR display device can be preferred.

The display device can be a computer monitor, a projector, a TV screen, a tablet, a personal digital assistant (PDA) device, a cell phone, a smart phone that combines PDA and cell phone, an iPod, an iPod/MP Player, a flexible thin film display, a high dynamic range (HDR) image display device, a low dynamic range (LDR), a standard dynamic range (SDR) display device, or any other display devices that can display information or images based on digital signals. The display device can also be a printing device that prints, based on digital signals, information or image onto papers, plastics, textiles, or any other surfaces that are suitable for printing the information or images onto. The display device can also be a multifunctional display/input/output device, such as a touch screen. The HDR images, either the HDR matching images or the specimen HDR images, can be displayed on a HDR image display device, a non-HDR image display device mentioned herein, or a combination thereof. The non-HDR image display device can be any of the display devices such as those standard display devices, low dynamic range (LDR) or standard dynamic range (SDR) display devices. The HDR image needs to be modified to display on a non-HDR image display device. Since the sparkles can have very high intensity, they can be difficult to display together with color characteristics in a same image. The HDR target image can be used to improve the display of sparkles and colors.

The method can further comprise the steps of:

A12) producing at least one matching coating composition based on one of the matching formulas; and
A13) applying said matching coating composition over a damaged coating area of said target coating to form a repair coating.

The matching coating composition can be produced by mixing the ingredients or components based on the matching formula. In one example, the matching coating composition can be produced by mixing polymers, solvents, pigments, dyes, effect pigments such as aluminum flakes and other coating additives, components based on a matching formula. In another example, the matching coating composition can be produced by mixing a number of premade components, such as crosslinking components having one or more crosslinking functional groups, crosslinkable components having one or more crosslinkable functional groups, tints having dispersed pigments or effect pigments, solvents and other coating additives or ingredients. In yet another example, the matching coating composition can be produced by mixing one or more radiation curable coating components, tints or pigments or effect pigments and other components. In yet another example, the matching coating composition can be produced by mixing one or more components comprising latex and effect pigments. Any typical components suitable for coating composition can be suitable. The solvents can be one or more organic solvents, water, or a combination thereof.

The coating composition can be applied over the an article or the damaged coating area by spraying, brushing, dipping, rolling, drawdown, or any other coating application techniques known to or developed by those skilled in the art. In one example, a coating damage on a car can be repaired by spraying the matching coating composition over the damaged area to form a wet coating layer. The wet coating layer can be cured at ambient temperatures in a range of from 15°C to 150°C.

In order to implement the invention, a system for matching color and appearance of a target coating of an article is used. The system comprises:

a) a color measuring device;

b) a sparkle measuring device;

c) a color database comprising formulas for coating compositions and interrelated sparkle characteristics, color characteristics, and one or more identifiers of articles;

d) a computing device comprising an input device and a display device, said computing device is functionally coupled to said color measuring device, said sparkle measuring device, and said color database; and

e) a computer program product residing in a storage media functionally coupled to said computing device, said computer program product causes said computing device to perform a computing process comprising the steps of claim 1.

Any color measuring devices capable of measuring color data at the two or more color viewing angles can be suitable. Any sparkle measuring devices capable of measuring sparkle data at the one or more sparkle viewing angles, one or more sparkle illumination angles, or a combination, can be suitable. The color measuring device and the sparkle measuring device can also be combined into a single device. Commercially available devices, such as the aforementioned Byc-mac, can be suitable.

Any computing devices can be suitable. A portable computing device, such as a laptop, a smart phone, a tablet, or a combination, can be suitable. A computing device can also be a built-in processing device of a color measuring device or a sparkle measuring device. The computing device can have shared input and/or display device with another device, such as a color measuring device or a sparkle measuring device.

In the system disclosed above, the computing process can further comprise a ranking process for producing the ranking list. The ranking process can comprise the steps of:

B1) grouping said one or more preliminary matching formulas into one or more category groups based on said sparkle differences ($\Delta S_g$) and said flop differences ($\Delta F$) according to predetermined ranges of $\Delta S_g$ values and $\Delta F$ values; and

B2) ranking the preliminary matching formulas in each of the category groups based on said color difference indexes (CDI).

In the system disclosed above, the computing process can further comprise the steps of:

C10) displaying on the display device the ranking list, one or more preliminary matching formulas based on predetermined values of sparkle differences, flop differences, or color difference indexes, said sparkle differences ($\Delta S_g$), said flop differences ($\Delta F$), said color difference indexes (CDI), or a combination thereof;

C11) receiving a selection input from said input device to select one or more matching formulas from said ranking list; and

C12) displaying said one or more matching formulas on said display device.

In one example, the ranking list is displayed. In another example, the ranking list and top one matching formula can be displayed. In yet another example, the ranking list and top 3 matching formulas can be displayed.

In the system disclosed above, the computing process can further comprise the steps of:

C13) generating matching images having matching display values based on appearance characteristics and the color characteristics of at least one of said preliminary matching formulas at at least one of said one or more color viewing angles, and generating at least one specimen image having specimen display values based on specimen appearance data and said specimen color data;

C14) displaying said matching images and said at least one specimen image on said display device; and

C15) receiving a selecting input from said input device to select one or more matching formulas; and

C16) displaying said one or more matching formulas on said display device.

The matching images, the specimen images, the animated matching images, the animated specimen images, or a combination thereof, can also be displayed. A combination of the ranking list, the matching formulas, matching images, and the specimen images can also be displayed on the display devices. The system can also have one or more subsequent display devices. The ranking list, the formulas, the images, or a combination thereof, can also be displayed on one or all of the one or more display devices.

The display device of the system can be a video display device for displaying the animated matching images or the animated specimen images.

The matching formulas can be selected by a computer, an operator, or a combination thereof. In one example, the computing program product can comprise computer executable codes to select the top ranked preliminary matching formula as the matching formula. In another example, the computing program product can comprise computer executable codes to select the top ranked preliminary matching formula and display the formula on the display device, then prompting for input by an operator to select the matching formula. In yet another example, the computing program product can comprise computer executable codes to select the top ranked preliminary matching formula as the matching formula and display the formula and an image of the formula on the display device, then prompting for input by an operator to select the matching formula. In yet another example, the computing program product can comprise computer executable codes to select the top ranked preliminary matching formula as the matching formula and display the formula, an image of the formula, and the specimen image on the display device, then prompting for input by an operator to select the matching formula. In yet another example, one or more matching formulas are displayed on the display device and the operator is prompted to select the matching formula. In yet another example, one or more matching images and at least one specimen image can be displayed on the display device and the operator can be prompted to select or further adjust the formula to produce the matching formulas. The operator can use the input device or other devices such as touch screen, mouse, touch pen, a keyboard, or a combination thereof, to enter his/her selection. The operator can also select the matching formula by noting an identifier of the formula such as a formula code without entering any input into the system.

The system disclosed herein can further comprise a mixing system. The mixing system can be functionally coupled to the computing device. The computing process can further comprise the steps of outputting one of the one or more matching formulas to the mixing system to produce a matching coating composition based on said matching formula. The mixing system can also be stand alone. The matching formulas produced herein can be entered into the mixing system manually or via one or more electronic data files. Typical mixing system having capability to store, deliver and mixing a plurality of components can be suitable.

The system disclosed herein can further comprise a coating application device to applying said matching coating composition over a damaged coating area of said target coating to form a repair coating. Typical coating application devices, such as spray guns, brushes, rollers, coating tanks, electrocoating devices, or a combination thereof can be suitable.

EXAMPLES

The present invention is further explained with reference to the following Examples.

EXAMPLE 1

The coating of a 2002 Jeep Cherokee was measured (target coating 1). Based on the vesicle's make, model year 2002 and its color code PDR, a number of preliminary matching formulas (F1-F7) were retrieved from ColorNet®, automotive refinish color system, available from E. I. du Pont de Nemours and Company, Wilmington, DE, USA, under respective trademark or registered trademarks (Table 1).

The color data and sparkle values were measured using a BYK-mac, available from BYK-Gardner USA, Maryland, USA. The flop value of the coating of the vehicle was generated based on color data measured at 3 viewing angles selected from 15°, 45°, and 110°. The sparkle data were based on images captured at the normal direction as shown in FIG. 2 with illumination angles selected from 15° and 45°.

The flop characteristics of the matching formulas are stored in a color database of the ColorNet® system and have compatible data on viewing angles of the vehicle measured. The sparkle characteristics of the matching formulas are stored in the color database and are have compatible data on illumination angles of the vehicle measured.

The flop differences ($\Delta F$) was calculated according to the flop value of the target coating ($F_{Spec}$) and the flop value of each of the preliminary matching formulas ($F_{Match}$) based on the equation:

$$\Delta F = (F_{Match} - F_{Spec})/F_{Spec.}$$

The sparkle differences ($\Delta S_g$) at the specified angles were provided in Table 1.

The preliminary matching formulas F1-F7 were grouped into category groups (Cat. 1 - 4) based on $\Delta F$ and $\Delta S_g$ (Table 1), wherein category 1 having the least difference.

In this Example, preliminary matching formulas in categories 2 and 3 were not considered further.

The preliminary matching formulas in category 1 were ranked based on the color difference index originally obtained from the color database (Ori. CDI). When the Ori. CDI was greater than a predetermined value, such as a value of "2" in this example, the formula was adjusted using the ColorNet® System to produce a subsequent preliminary matching formula having a subsequent color difference index (sub-CDI). The subsequent preliminary matching formulas were ranked again based on the sub-CDI (Table 2).

Table 1. Coating and formula data.

| Formula ID | Ori. CDI | Sub-CDI | Cat | Flop | $S_g^{15}$ | $S_g^{45}$ | $\Delta F$ | $\Delta S_g^{15}$ | $\Delta S_g^{45}$ |
|---|---|---|---|---|---|---|---|---|---|
| Target Coating 1 | - | - | - | 11.89 | 8.35 | 6.43 | - | - | - |
| F1 | - | - | 2 | 17.80 | 8.95 | 6.38 | 0.50 | 0.60 | -0.05 |
| F2 | 3.30 | 2.50 | 1 | 12.94 | 8.34 | 7.19 | 0.09 | -0.01 | 0.76 |
| F3 | 3.70 | 2.80 | 1 | 16.54 | 9.10 | 6.50 | 0.39 | 0.75 | 0.07 |
| F4 | 3.50 | 2.10 | 1 | 16.19 | 8.61 | 6.49 | 0.36 | 0.26 | 0.06 |
| F5 | - | - | 3 | 10.61 | 6.53 | 4.83 | -0.11 | -1.82 | -1.60 |
| F6 | - | - | 3 | 14.68 | 6.70 | 6.02 | 0.23 | -1.65 | -0.41 |
| F7 | 2.60 | 1.10 | 1 | 13.80 | 8.49 | 6.67 | 0.16 | 0.14 | 0.24 |

Table 2. Ranking List of Matching Formulas.

| Formula ID | Rank | Ori. CDI | Sub-CDI | Cat |
|---|---|---|---|---|
| F7 | 1 | 2.60 | 1.10 | 1 |
| F4 | 2 | 3.50 | 2.10 | 1 |
| F2 | 3 | 3.30 | 2.50 | 1 |
| F3 | 4 | 3.70 | 2.80 | 1 |

The top ranked formula F7 was selected as the matching formula.

EXAMPLE 2

The coating of a 2003 Ford Explorer was measured (target coating 2). Based on the vesicle's make, model year 2003 and its color code JP, a number of preliminary matching formulas (F8-F13) were retrieved from the ColorNet®, automotive refinish color system (Table 3). The preliminary matching formulas were analyzed as described above and ranked as shown in Table 4. The formulas in Category group 2 were adjusted to produce subsequent matching formulas having subsequent CDIs (sub-CDI).

Table 3. Flop and sparkle data.

| Formula ID | Ori. CDI | Sub-CDI | Cat | Flop | $S_g^{15}$ | $S_g^{45}$ | $\Delta F$ | $\Delta S_g^{15}$ | $\Delta S_g^{45}$ |
|---|---|---|---|---|---|---|---|---|---|
| Target Coating 2 | - | - | - | 9.80 | 7.62 | 7.55 | - | - | - |
| F8 | - | - | 4 | 11.30 | 5.88 | 4.82 | 0.15 | -1.74 | -2.73 |
| F9 | 2.70 | 1.40 | 2 | 9.28 | 7.29 | 6.46 | -0.05 | -0.33 | -1.09 |
| F10 | - | - | 3 | 10.68 | 6.56 | 5.58 | 0.09 | -1.06 | -1.97 |
| F11 | 3.20 | 1.80 | 2 | 10.24 | 7.37 | 6.13 | 0.05 | -0.25 | -1.42 |
| F12 | 2.40 | 1.70 | 2 | 9.33 | 7.13 | 6.29 | -0.05 | -0.49 | -1.26 |
| F13 | 6.60 | 1.30 | 2 | 8.53 | 9.13 | 7.63 | -0.13 | 1.51 | 0.08 |

Table 4. Ranking List of Matching Formulas.

| Formula ID | Rank | Ori. CDI | Sub-CDI | Cat |
|---|---|---|---|---|
| F13 | 1 | 6.60 | 1.30 | 2 |
| F9 | 2 | 2.70 | 1.40 | 2 |

(continued)

| Formula ID | Rank | Ori. CDI | Sub-CDI | Cat |
|---|---|---|---|---|
| F12 | 3 | 2.40 | 1.70 | 2 |
| F11 | 4 | 3.20 | 1.80 | 2 |

The top ranked formula F13 was selected as the matching formula.

**Claims**

1. A method for matching color and appearance of a target coating (10) of an article, the target coating (10) comprising one or more effect pigments, said method comprising the steps of:

A1 ) obtaining specimen sparkle values of the target coating (10) measured at one or more sparkle viewing angles, one or more sparkle illumination angles, or a combination thereof;

A2) obtaining specimen color data of the target coating measured at three color viewing angles of which a first angle is a near aspecular angle that is a viewing angle in a range from 15° to 25° from a specular reflection (12) of an illumination device (11), a second angle is a mid aspecular angle that is a viewing angle of 45° from the specular reflection (12) of the illumination device (11), and a third angle is a far aspecular angle that is a viewing angle in a range from 75° to 110° from the specular reflection (12) of the illumination device (11) and one or more illumination angles;

A3) generating specimen flop values based on said specimen color data, wherein the flop values are defined by the following equation:

$$\text{Flop value} = 2{,}69 \text{ x } (L*_{15°} - L*_{110°})^{1,11} / L*_{45°}^{0,86};$$

wherein $L*_{15°}$ is a lightness at the first angle taken at 15 degrees, and $L*_{110°}$ is a lightness at the third angle taken at 110 degrees, and $L*_{45°}$ is the lightness at the second angle;

A4) retrieving from a color database one or more preliminary matching formulas based on said specimen color data, an identifier of said article, or a combination thereof, said color database comprises formulas for coating compositions and interrelated sparkle characteristics, color characteristics, and one or more identifiers of articles;

A5) generating one or more sparkle differences (ΔSg) between sparkle characteristics of each of said preliminary matching formulas at each of said one or more sparkle viewing angles and said specimen sparkle values;

A6) generating one or more flop differences (ΔF) between flop characteristics derived from color characteristics of each of said preliminary matching formulas and said specimen flop values;

A7) generating one or more color difference indexes (CDI) as a function of color differences between said specimen color data and color characteristics of each of said preliminary matching formulas; and

A8) selecting from said preliminary matching formulas one or more matching formulas based on said sparkle differences (ΔSg), said flop differences (ΔF), and said color difference indexes (CDI).

2. The method of claim 1 further comprising the steps of:

A9) generating matching images having matching display values based on appearance characteristics and the color characteristics of each of said preliminary matching formulas at each of said one or more color viewing angles, one or more color illumination angles, or a combination thereof, and optionally generating specimen images having specimen display values based on specimen appearance data and said specimen color data;

A10) displaying said matching images and optionally said specimen images on a display device; and

A11) selecting a best matching formula from said one or more matching formulas by visually comparing said matching images to said article, and optionally visually comparing said matching images to said specimen images.

3. The method of claim 2, wherein said appearance characteristics comprise the sparkle characteristics associated with each of said preliminary matching formulas, matching texture functions associated with each of said preliminary matching formulas, or a combination thereof, said matching texture functions being selected from measured matching texture function, predicted matching texture function, or a combination thereof.

4. The method of claim 2, wherein said specimen appearance data comprise the specimen sparkle data, a specimen texture function, or a combination thereof, said specimen texture function being selected from measured specimen texture function, derived specimen texture function, or a combination thereof;
or

wherein said matching display values comprise R,G,B values based on the appearance characteristics and the color characteristics, and said specimen display values comprise R,G,B values based on the specimen appearance data and said specimen color data; or
wherein said matching images are displayed based on one or more illumination angles, one or more viewing angles, or a combination thereof.

5. The method of claim 2, wherein at least one of said matching images is generated as a high dynamic range (HDR) matching image, using an imaging device using two or more sensors having varying sensitivities.

6. The method of claim 2, wherein at least one of said matching images is generated as a high dynamic range (HDR) matching image, wherein said HDR matching image is generated using bidirectional reflectance distribution function (BRDF), preferably
said HDR matching image is displayed on a HDR image display device, a non-HDR image display device, or a combination thereof.

7. The method of claim 2 further comprising the steps of generating animated matching images having animated matching display values based on the appearance characteristics and the color characteristics, animated appearance characteristics and animated color characteristics interpolated based on the appearance characteristics and the color characteristics; and displaying said animated matching images on said display device.

8. The method of claim 1, wherein said specimen sparkle values are measured at two sparkle illumination angles, preferably
said specimen sparkle values are measured at sparkle illumination angles selected from 15° and 45°.

9. The method of claim 1, wherein specimen color data are measured at color viewing angles selected of 15°, 45°, 110°.

10. The method of claim 1, wherein said one or more matching formulas are selected by a selection process comprising the steps of:

B1) grouping said one or more preliminary matching formulas into one or more category groups based on said sparkle differences ($\Delta$Sg) and said flop differences ($\Delta$F) according to predetermined ranges of $\Delta$Sg values and $\Delta$F values;
B2) ranking the preliminary matching formulas in each of the one or more category groups based on said color difference indexes (CDI);
B3) selecting said one or more matching formulas having the minimum values or having predetermined values in CDI of each of the one or more category groups.

11. The method of claim 10, wherein said selection process further comprises the steps of:

B4) modifying one or more of said preliminary matching formulas to produce one or more subsequent preliminary matching formulas each having a subsequent color difference index (sub-CDI) if said color difference indexes (CDI) are greater than a predetermined CDI value; and
B5) repeating the steps B1) - B5) until said sub-CDI is equal to or less than said predetermined CDI value to produce said matching formulas, preferably said selection process further comprises the steps of:

B6) producing predicted sparkle characteristics of one or more of the subsequent preliminary matching formulas based on said subsequent preliminary matching formulas and color characteristics associated with said subsequent preliminary matching formulas;
B7) modifying said subsequent preliminary matching formulas; and
B8) repeating the steps of B1) - B8) until said predicted sparkle characteristics are equal to or less than a predetermined sparkle value and said sub-CDI is equal to or less than said predetermined CDI value.

**12.** The method of claim 1, wherein said specimen flop values further comprise chroma change, hue change, or a combination thereof.

**13.** The method of claim 1, wherein said article is a vehicle and said identifier of said article comprises vehicle identification number (VIN) of the vehicle, part of the VIN, color code of the vehicle, production year of the vehicle, or a combination thereof.

**14.** The method of claim 1 further comprising the steps of:

A12) producing at least one matching coating composition based on one of the matching formulas; and
A13) applying said matching coating composition over a damaged coating area of said target coating to form a repair coating.

**Patentansprüche**

**1.** Verfahren zur Anpassung der Farbe und des Erscheinungsbilds einer Zielbeschichtung (10) eines Artikels, wobei die Zielbeschichtung (10) ein oder mehrere Effektpigmente umfasst, wobei das Verfahren die Schritte umfasst des:

A1) Erhaltens von Probeglanzwerten der Zielbeschichtung (10), in einem oder mehreren Glanzbetrachtungswinkeln, einem oder mehreren Glanzbeleuchtungswinkeln oder einer Kombination davon gemessen;
A2) Erhaltens von Probefarbdaten der Zielbeschichtung, an drei Farbbetrachtungswinkeln gemessen, wovon ein erster Winkel ein fast aspekulärer Winkel ist, der ein Betrachtungswinkel in einem Bereich von 15° bis 25° von einer spekulären Reflexion (12) einer Beleuchtungsvorrichtung (11) ist, ein zweiter Winkel ein mittlerer aspekulärer Winkel ist, der ein Betrachtungswinkel von 45° von einer spekulären Reflexion (12) der Beleuchtungsvorrichtung (11) ist, und ein dritter Winkel ein fernaspekulärer Winkel ist, der ein Betrachtungswinkel in einem Bereich von 75° bis 110° von der spekulären Reflexion (12) der Beleuchtungsvorrichtung (11) und einem oder mehreren Beleuchtungswinkeln ist;
A3) Erzeugens von Probe-Flopwerten auf der Basis der Probefarbdaten, wobei die Flopwerte durch die folgende Gleichung definiert werden:

$$\text{Flopwert} = 2{,}69 \times (L^*_{15°} - L^*_{110°})^{1{,}11}/L^{*0{,}86}_{45°}$$

wobei $L^*_{15°}$ eine Helligkeit im ersten Winkel, bei 15 Grad genommen, ist und $L^*_{110°}$ eine Helligkeit im dritten Winkel bei 110 Grad genommen, ist und $L^*_{45°}$ die Helligkeit im zweiten Winkel ist;
A4) Wiedergewinnens, aus einer Farbdatenbase, einer oder mehrerer vorläufiger passender Formeln auf der Basis der Probefarbdaten, eines Identifizierers des Artikels oder einer Kombination davon, wobei die Farbdatenbase Formeln für Beschichtungszusammensetzungen und in gegenseitiger Beziehung stehende Glanzcharakteristiken, Farbcharakteristiken und einen oder mehrere Identifizierer von Artikeln umfasst;
A5) Erzeugens eines oder mehrerer Glanzunterschiede (ΔSg) zwischen Glanzcharakteristiken von jeder der vorläufigen passenden Formeln an jedem des einen oder der mehreren Glanzbetrachtungswinkeln und den Probeglanzwerten;
A6) Erzeugens eines oder mehrerer Flopunterschiede (ΔF) zwischen Flopcharakteristiken, die von Farbcharakteristiken jeder der vorläufigen passenden Formeln und den Probe-Flopwerden abgeleitet sind;
A7) Erzeugens eines oder mehrerer Farbunterschiedindizes (CDI) in Abhängigkeit von den Farbunterschieden zwischen den Probefarbdaten und Farbcharakteristiken jeder der vorläufigen passenden Formeln; und
A8) Auswählens, aus den vorläufigen passenden Formeln, einer oder mehrerer passender Formeln auf der Basis der Glanzunterschiede (ΔSg), der Flopunterschiede (ΔF) und der Farbunterschiedindizes (CDI).

**2.** Verfahren nach Anspruch 1, ferner die Schritte umfassend des:

A9) Erzeugens passender Bilder, die passende Anzeigewerte aufweisen, auf der Basis von Erscheinungscharakteristiken und den Farbcharakteristiken jeder der vorläufigen passenden Formeln an jedem des einen oder der mehreren Farbbetrachtungswinkel, einem oder mehreren Farbbeleuchtungswinkel oder einer Kombination davon und wahlweise Erzeugens von Probebildern, die Probeanzeigewerte aufweisen, auf der Basis von Probeerscheinungsdaten und den Probefarbdaten;

A10) Anzeigens der passenden Bilder und wahlweise der Probebilder auf einer Anzeigevorrichtung; und
A11) Wählens der passendsten Formel unter der einen oder den mehreren passenden Formeln durch visuelles Vergleichen der passenden Bilder mit dem Artikel und wahlweises visuelles Vergleichen der passenden Bilder mit den Probebildern.

3. Verfahren nach Anspruch 2, wobei die Erscheinungscharakteristiken die Glanzcharakteristiken, die mit jeder der vorläufigen passenden Formeln verbunden sind, passende Strukturfunktionen, die mit jeder der vorläufigen passenden Formeln verbunden sind, oder eine Kombination davon umfassen, wobei die passenden Strukturfunktionen unter gemessenen passenden Strukturfunktionen, vorausgesagten passenden Strukturfunktionen oder einer Kombination davon ausgewählt werden.

4. Verfahren nach Anspruch 2, wobei die Probeerscheinungsdaten die Probeglanzdaten, eine Probestrukturfunktion oder eine Kombination davon umfassen, wobei die Probestrukturfunktion unter der gemessenen Probestrukturfunktion, der abgeleiteten Probestrukturfunktion oder Kombinationen davon ausgewählt wird;
oder

wobei die passenden Anzeigewerte R.G.B-Werte auf der Basis der Erscheinungscharakteristiken und der Farbcharakteristiken umfassen und die Probeanzeigewerte R.G.B-Werte auf der Basis der Probeerscheinungsdaten und der Probefarbdaten umfassen;
oder
wobei die passenden Bilder auf der Basis von einem oder mehreren Beleuchtungswinkeln, einem oder mehreren Betrachtungswinkeln oder einer Kombination davon angezeigt werden.

5. Verfahren nach Anspruch 2, wobei mindestens eines der passenden Bilder als passendes Bild von hohem dynamischem Bereich (HDR) unter Anwendung einer Bildgebungsvorrichtung unter Anwendung von zwei oder mehr Sensoren, die verschiedene Empfindlichkeiten aufweisen, erzeugt wird.

6. Verfahren nach Anspruch 2, bei mindestens eines der passenden Bilder als passendes Bild von hohem dynamischem Bereich (HDR) erzeugt wird, wobei das passende HDR-Bild unter Anwendung einer bidirektionalen Reflexionsgradverteilungsfunktion (BRDF), erzeugt wird, bevorzugt das passende HDR-Bild an einer HDR-Bildanzeigevorrichtung, einer Nicht-HDR-Bildanzeigevorrichtung oder einer Kombination davon angezeigt wird.

7. Verfahren nach Anspruch 2, ferner die Schritte umfassend des Erzeugens belebter passender Bilder, die belebte passende Anzeigewerte auf der Basis der Erscheinungscharakteristiken und der Farbcharakteristiken, belebte Erscheinungscharakteristiken und belebte Farbcharakteristiken aufweisen, die auf der Basis der Erscheinungscharakteristiken und der Farbcharakteristiken interpoliert sind; und wobei die belebten passenden Bilder auf der Anzeigevorrichtung angezeigt werden.

8. Verfahren nach Anspruch 1, wobei die Probeglanzwerte an zwei Glanzbeleuchtungswinkeln gemessen werden, bevorzugt die Probeglanzwerte an Glanzbeleuchtungswinkeln ausgewählt von 15° und 45° gemessen werden.

9. Verfahren nach Anspruch 1, wobei die Probefarbdaten an Farbbetrachtungswinkeln ausgewählt von 15°, 45°, 110° gemessen werden.

10. Verfahren nach Anspruch 1, wobei die eine oder mehreren passenden Formeln durch einen Auswählvorgang ausgewählt werden umfassend die Schritte des:

B1) Gruppierens der einen oder mehreren vorläufigen passenden Formeln in eine oder mehrere Kategoriegruppen auf der Basis der Glanzunterschiede ($\Delta Sg$) und der Flopunterschiede ($\Delta F$) vorbestimmten Bereichen von $\Delta Sg$-Werten und $\Delta F$-Werten entsprechend;
B2) Einstufens der vorläufigen passenden Formeln in jede der einen oder mehreren Kategoriegruppen auf der Basis der Farbunterschiedindizes (CDI);
B3) Wählens der einen oder mehreren passenden Formeln, die Mindestwerte oder vorbestimmte Werte aufweisen, in CDI jeder der einen oder mehreren Kategoriegruppen.

11. Verfahren nach Anspruch 10, wobei der Auswahlvorgang ferner die Schritte umfasst des:

B4) Modifizierens einer oder mehrerer der vorläufigen passenden Formeln, um eine oder mehrere darauffolgende vorläufige passende Formeln herzustellen, wobei jede einen darauffolgenden Farbunterschiedindex (Sub-CDI) aufweist, wenn die Farbunterschiedindizes (CDI) höher als ein vorbestimmter CDI-Wert ist; und

B5) Wiederholens der Schritte B1)-B5), bis der Sub-CDI gleich oder geringer als der vorbestimmte CDI-Wert ist, um die passenden Formeln herzustellen, wobei bevorzugt der Auswählvorgang ferner die Schritte umfasst des:

B6) Herstellens vorhergesagter Glanzcharakteristiken einer oder mehrerer der darauffolgenden vorläufigen passenden Formeln auf der Basis der darauffolgenden vorläufigen passenden Formeln und Farbcharakteristiken, die mit den darauffolgenden vorläufigen passenden Formeln verbunden sind;

B7) Modifizierens der darauffolgenden vorläufigen passenden Formeln; und

B8) Wiederholens der Schritte B1)-B8), bis die vorausgesagten Glanzcharakteristiken gleich wie oder geringer sind als ein vorbestimmter Glanzwert und der Sub-CDI gleich wie oder geringer ist als der vorbestimmte CDI-Wert.

**12.** Verfahren nach Anspruch 1, wobei die Probe-Flopwerte ferner Farbsättigungsänderung, Farbtonänderung oder eine Kombination davon umfassen.

**13.** Verfahren nach Anspruch 1, wobei der Artikel ein Fahrzeug ist und der Identifizierer des Artikels die Fahrzeugidentifizierungsnummer (VIN) des Fahrzeugs, einen Teil von VIN, den Farbcoden des Fahrzeugs, das Herstellungsjahr des Fahrzeugs oder eine Kombination davon umfasst.

**14.** Verfahren nach Anspruch 1, ferner die Schritte umfassend des:

A12) Herstellens mindestens einer passenden Beschichtungszusammensetzung auf der Basis von einer der passenden Formeln; und

A13) Aufbringens der passenden Beschichtungszusammensetzung über einen beschädigten Beschichtungsbereich der Zielbeschichtung, um eine Reparaturbeschichtung zu bilden.

**Revendications**

**1.** Procédé pour faire correspondre la couleur et l'apparence d'un revêtement cible (10) d'un article, le revêtement cible (10) comprenant un ou plusieurs pigments à effet, ledit procédé comprenant les étapes consistant à :

AI) obtenir des valeurs de scintillement d'échantillon du revêtement cible (10) mesurées à un ou plusieurs angles de vue de scintillement, un ou plusieurs angles d'illumination de scintillement, ou une combinaison de ceux-ci ;

A2) obtenir les données de couleur d'échantillon du revêtement cible mesurées à trois angles d'observation de la couleur dont un premier angle est un angle aspeculaire proche qui est un angle d'observation dans une plage allant de 15° à 25° à partir d'une réflexion spéculaire (12) d'un dispositif d'éclairage (11), un deuxième angle est un angle aspeculaire moyen qui est un angle d'observation de 45° par rapport à la réflexion spéculaire (12) du dispositif d'éclairage (11), et un troisième angle est un angle aspeculaire lointain qui est un angle d'observation dans une plage allant de 75° à 110° par rapport à la réflexion spéculaire (12) du dispositif d'éclairage (11) et d'un ou de plusieurs angles d'éclairage ;

A3) générer des valeurs de flottement d'échantillon sur la base desdites données de couleur d'échantillon, dans lequel les valeurs de flottement sont définies par l'équation suivante :

$$\text{Valeur de flottement} = 2{,}69 \times (L^*_{15°} - L^*_{110°})^{1,11} / L^*_{45°}{}^{0,86} \ ;$$

où $L^*_{15°}$ est une luminosité au premier angle pris à 15 degrés, et $L^*_{110°}$ est une luminosité au troisième angle pris à 110 degrés, et $L^*_{45°}$ est la luminosité au deuxième angle ;

A4) récupérer une base de données de couleurs d'une ou de plusieurs formules d'appariement préliminaires basées sur lesdites données de couleur d'échantillon, un identifiant dudit article, ou une combinaison de ceux-ci, ladite base de données de couleurs comprenant des formules pour des compositions de revêtement et des caractéristiques de scintillement, des caractéristiques de couleur et un ou plusieurs identifiants d'articles interdépendants ;

A5) générer une ou plusieurs différences de scintillement ($\Delta$Sg) entre les caractéristiques de scintillement de chacune desdites formules d'appariement préliminaires à chacun desdits angles de visualisation de scintillement et lesdites valeurs de scintillement d'échantillon ;

A6) générer une ou plusieurs différences de flottement (ΔF) entre les caractéristiques de flottement dérivées des caractéristiques de couleur de chacune desdites formules d'appariement préliminaires et desdites valeurs de flottement d'échantillon ;

A7) générer un ou plusieurs indices de différence de couleur (CDI) en fonction des différences de couleur entre lesdites données de couleur d'échantillon et les caractéristiques de couleur de chacune desdites formules d'appariement préliminaires ; et

A8) sélectionner parmi lesdites formules d'appariement préliminaires une ou plusieurs formules d'appariement basées sur lesdites différences de scintillement (ΔSg), lesdites différences de flottement (ΔF) et lesdits indices de différence de couleur (CDI).

2. Procédé selon la revendication 1 comprenant en outre les étapes consistant à :

A9) générer des images d'appariement ayant des valeurs d'affichage d'appariement basées sur des caractéristiques d'apparence et les caractéristiques de couleur de chacune de ces formules d'appariement préliminaires à chacun dudit ou desdits angles de visualisation de couleur, un ou plusieurs angles d'illumination de couleur, ou une combinaison de ceux-ci, et éventuellement générer des images d'échantillon ayant des valeurs d'affichage d'échantillon basées sur des données d'apparence d'échantillon et lesdites données de couleur d'échantillon ;

A10) afficher lesdites images d'appariement et éventuellement lesdites images d'échantillon sur un dispositif d'affichage ; et

A11) sélectionner une formule d'appariement optimale parmi ladite ou lesdites formules d'appariement en comparant visuellement lesdites images d'appariement audit article et, éventuellement, en comparant visuellement lesdites images d'appariement aux images d'échantillon.

3. Procédé selon la revendication 2, dans lequel lesdites caractéristiques d'apparence comprennent les caractéristiques de scintillement associées à chacune desdites formules d'appariement préliminaires, desdites fonctions de texture d'appariement associées à chacune desdites formules d'appariement préliminaires, ou une combinaison de celles-ci, lesdites fonctions de texture d'appariement étant sélectionnées parmi les fonctions de texture d'appariement mesurées, les fonctions de texture d'appariement prédites, ou une combinaison de celles-ci.

4. Procédé selon la revendication 2, dans lequel lesdites données d'apparence d'échantillon comprennent les données de scintillement d'échantillon, une fonction de texture d'échantillon ou une combinaison de celles-ci, ladite fonction de texture d'échantillon étant sélectionnée parmi la fonction de texture d'échantillon mesurée, la fonction de texture d'échantillon dérivée ou une combinaison de celles-ci ;

ou

dans lequel lesdites valeurs d'affichage correspondantes comprennent des valeurs R, G, B basées sur les caractéristiques d'aspect et les caractéristiques de couleur, et lesdites valeurs d'affichage d'échantillon comprennent des valeurs R, G, B basées sur les données d'aspect d'échantillon et les données de couleur d'échantillon ;

ou

dans lequel les images correspondantes sont affichées en fonction d'un ou de plusieurs angles d'éclairage, d'un ou de plusieurs angles de vue, ou d'une combinaison de ceux-ci.

5. Procédé selon la revendication 2, dans lequel au moins l'une des images d'appariement est générée en tant qu'image d'appariement à gamme dynamique élevée (HDR), à l'aide d'un dispositif d'imagerie utilisant deux capteurs ou plus ayant des sensibilités variables.

6. Procédé selon la revendication 2, dans lequel au moins une des images d'appariement est générée en tant qu'image d'appariement à gamme dynamique élevée (HDR), dans lequel ladite image d'appariement HDR est générée à l'aide de la fonction de distribution de la réflectance bidirectionnelle (BRDF), de préférence ladite image d'appariement HDR est affichée sur un dispositif d'affichage d'image HDR, un dispositif d'affichage d'image non HDR, ou une combinaison de ceux-ci.

7. Procédé selon la revendication 2 comprenant en outre les étapes consistant à générer des images animées d'appariement ayant des valeurs d'affichage animées d'appariement basées sur les caractéristiques d'apparence et de couleur, des caractéristiques d'apparence animées et des caractéristiques de couleur animées interpolées sur la base des caractéristiques d'apparence et des caractéristiques de couleur; et à afficher lesdites images animées d'appariement sur ledit dispositif d'affichage.

8. Procédé selon la revendication 1, dans lequel les valeurs de scintillement d'échantillon sont mesurées à deux angles d'illumination du scintillement, de préférence les valeurs de scintillement d'échantillon sont mesurées à des angles d'illumination du scintillement choisis entre 15° et 45°.

9. Procédé selon la revendication 1, dans lequel les données relatives à la couleur d'échantillon sont mesurées à des angles de vision de la couleur choisis entre 15°, 45° et 110°.

10. Procédé selon la revendication 1, dans lequel ladite ou lesdites formules d'appariement sont sélectionnées par un processus de sélection comprenant les étapes consistant à :

B1) regrouper lesdites formules d'appariement préliminaires en un ou plusieurs groupes de catégories sur la base desdites différences de scintillement ($\Delta$Sg) et desdites différences de flottement ($\Delta$F) selon des plages prédéterminées de valeurs $\Delta$Sg et de valeurs $\Delta$F ;
B2) classer les formules d'appariement préliminaires dans chacun des un ou plusieurs groupes de catégories sur la base desdits indices de différence de couleur (CDI) ;
B3) sélectionner ladite ou lesdites formules d'appariement ayant les valeurs minimales ou ayant des valeurs prédéterminées de CDI de chacun des un ou plusieurs groupes de catégories.

11. Procédé selon la revendication 10, dans lequel ledit processus de sélection comprend en outre les étapes consistant à :

B4) modifier une ou plusieurs desdites formules d'appariement préliminaires pour produire une ou plusieurs formules d'appariement préliminaires ultérieures ayant chacune un indice de différence de couleur ultérieur (sous-CDI) si lesdits indices de différence de couleur (CDI) sont supérieurs à une valeur de CDI prédéterminée ; et
B5) répéter les étapes B1) à B5) jusqu'à ce que ledit sous-CDI soit inférieur ou égal à ladite valeur de CDI prédéterminée pour produire lesdites formules d'appariement, de préférence, ledit processus de sélection comprend en outre les étapes consistant à :
B6) produire des caractéristiques de scintillement prédites pour une ou plusieurs des formules d'appariement préliminaires ultérieures sur la base desdites formules d'appariement préliminaires ultérieures et des caractéristiques de couleur associées auxdites formules d'appariement préliminaires ultérieures ;
B7) modifier lesdites formules d'appariement préliminaires ultérieures ; et
B8) répéter les étapes B1) à B8) jusqu'à ce que les caractéristiques de scintillement prédites soient inférieures ou égales à une valeur de scintillement prédéterminée et que le sous-CDI soit inférieur ou égal à la valeur de CDI prédéterminée.

12. Procédé selon la revendication 1, dans lequel les valeurs de flottement de l'échantillon comprennent en outre un changement de chroma, un changement de teinte ou une combinaison de ceux-ci.

13. Procédé selon la revendication 1, dans lequel ledit article est un véhicule et ledit identificateur dudit article comprend le numéro d'identification du véhicule (VIN), une partie du VIN, le code couleur du véhicule, l'année de production du véhicule ou une combinaison de ceux-ci.

14. Procédé selon la revendication 1, comprenant en outre les étapes consistant à :

A12) produire au moins une composition de revêtement d'appariement basée sur l'une des formules d'appariement ; et
A13) appliquer ladite composition de revêtement d'appariement sur une zone de revêtement endommagée dudit revêtement cible pour former un revêtement de réparation.

FIG. 1

**FIG. 2**

**FIG. 3**

EP 2 761 517 B1

41    42

44    43

**FIG. 4**

**FIG. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009019086 A1
- WO 2008103405 A1
- US 2005128484 A1
- US 3690771 A
- WO 2008150378 A1
- US 61498748 B
- US 61498756 B
- US 7743055 B
- US 7747615 B
- US 7639255 B
- US 7991596 B